# EUROPEAN PATENT APPLICATION

(11) **EP 1 282 265 A2**
(43) Date of publication of application: **05.02.2003**
(21) Application number: 02000148.3
(22) Date of filing: 07.01.2002
(51) Int. Cl.: H04L 12/26

(54) **Media converter and transmission system using the same**

(30) Priority: 26.07.2001 JP 2001225960; 30.07.2001 JP 2001228934
(71) Applicant: Allied Telesis Kabushiki Kaisha, Shinagawa-ku, Tokyo 141-8635 (JP)
(72) Inventor: Tanaka, Kazuyasu, Allied Telesis Kabushiki Kaisha, Shinagawa-ku, Tokyo 141-8635 (JP); Maruyama, Takeshi, Allied Telesis Kabushiki Kaisha, Shinagawa-ku, Tokyo 141-8635 (JP)
(74) Representative: VOSSIUS & PARTNER

(57) **Abstract**

A transmission system allowing a response test to be activated from cable side and easy detection of occurrence of a failure is disclosed. In a transmission system for transmitting data between a first communication point and a second communication point along a link, a test manager transmits a trigger signal to a media converter on the link, and determines a location of a failure depending on whether a response block of data is received from a corresponding media converter within a predetermined time period. When a media converter has received the trigger signal, a response packet corresponding to the trigger signal is transmitted back to a source that has transmitted the trigger signal. A packet buffer is preferably provided in a media converter so that when one link is disconnected, the other link can be used to transmit packets, allowing a link test.

## Description

The present invention relates to a transmission system including at least one media converter for converting from one type of media to another, and in particular to a media converter suitable for a link test system, and a control method of the media converter.

There has been a lot of talk recently about FTTH (Fiber To The Home) allowing high-speed transmission of multimedia data such as music, moving picture, and medical data by the installation of optical fiber directly to the home or office. In an era of FTTH, a media converter is an indispensable communication device to connect a fiber-optic line to a computer in the home or office.

In general, a media converter has a pair of ports that are to be connected to a fiber-optic cable and a UTP cable, respectively. For each of the ports, a physical-layer device is provided, which supports MII (Media Independent Interface) conforming to IEEE802.3 standards.

In addition, since a media converter converts from one type of media to another, it usually has a missing-link function such that, in case of disconnection in one link, the other link is automatically disconnected. For example, in the event that the link on the fiber-optic side has been disconnected due to some failure on the fiber-optic cable, the media converter automatically disconnects the other link on the UTP cable side.

In the case where such a media converter is used to connect the UTP cable to the fiber-optic cable, it is necessary to perform a link test to check whether each cable is properly connected to an opposite device on a corresponding link.

A conventional media converter is provided with a link-test switch by which a link test function is activated to determine whether each link is properly established. The link status for each port is indicated by a light-emitting diode (LED) provided for each port.

There have been proposed various link test techniques of networks. For example, Japanese Patent Application Unexamined Publication No. 8-331126 discloses a link test method using a special control code to be transmitted between two adjacent switches connected by a link. More specifically, one switch transmits a control code to the other switch, which in turn transmits a response message back to the source switch. The source switch detects the presence or absence of a response to the control code and, when receiving the response message, analyzes it, to determine whether the link normally functions.

However, the above link test technique is used on network switches and is fundamentally different in structure and function from a media converter designed to convert from one type of media to another with a missing-link function.

As described above, since a conventional media converter is set to the test mode by operating the link-test switch, it is impossible to activate the link test from cable side (UTP cable or fiber-optic cable) and therefore difficult to perform the link test rapidly and easily. In other words, the conventional media converter is not designed to be controlled from network side.

Further, when the missing-link function of media converter is activated, the entire transmission system is set to link disconnection and therefore the host computer cannot monitor any status of the media converter, even if the media converter operates normally.

An object of the present invention is to provide a transmission system allowing easy detection of occurrence of a failure and the location thereof in the link including the media converter.

Another object of the present invention is to provide a media converter suitable for a link test system allowing easy detection of occurrence of a failure and the location thereof in the link including the media converter.

Still another object of the present invention is to provide a transmission system, a media converter and its control method allowing a response test to be activated from cable side.

Further another object of the present invention is to provide a transmission system, a media converter and its control method allowing one link from a media converter to an end device to be maintained even when the other link is disconnected.

According to the present invention, a transmission system for transmitting data between a first communication point and a second communication point along a link, includes: a plurality of media converters included in the link, each of which includes: a first physical-layer interface to a first transmission medium; a second physical-layer interface to a second transmission medium; a memory connected between the first and second physical-layer interfaces, for temporarily storing data to be transferred between the first and second physical-layer interfaces; and a media converter controller controlling such that, when a trigger signal has been received, a response block of data corresponding to the trigger signal is transmitted from a corresponding one of the first and second physical-layer interfaces back to a source that has transmitted the trigger signal; and a test manager connected to one of the media converters, includes: an interface to a network manager; and a test manager controller controlling such that a trigger signal is transmitted to another media converter, and a location of a failure is determined depending on whether a response block of data is received from a corresponding media converter within a predetermined time period.

The first communication point may be one of a plurality of ports of a switch and the second communication point may be a personal computer, wherein the test manager is connected to a media converter which is directly connected to the switch. The first communication point may be one of a plurality of ports of a switch and the second communication point may be a personal computer, wherein the test manager is implemented in a program-controlled processor of the switch to control a media converter which is directly connected to the switch.

The test manager controller may determine that a failure occurs at a location beyond the corresponding media converter when a response block of data is not received from a corresponding media converter within a predetermined time period.

Each of the first and second physical-layer interfaces may support MII (Media Independent Interface) conforming to IEEE802.3 standards. The media converter controller may access another one of the first and second physical-layer interfaces to acquire link information from the other physical-layer interface when the trigger signal has been received and may generate the response block of data corresponding to the link information.

The test manager controller may disable the missing link state when a test is started and may force a corresponding physical-layer interface into transmittable state to transmit the block of data to the link.

The media converter controller may disable a missing link state when the trigger signal has been received, and may transmit the response block of data to the source.

When a received block of data is not a trigger signal under the missing link state, the media converter controller may disable the missing link state to transfer the received block of data to the other one of the first and second physical-layer interfaces.

According to another aspect of the present invention, a transmission system for transmitting data between a switching office and each of a plurality of subscriber devices, wherein the switching office comprises a switch having a plurality of ports corresponding to respective ones of the subscriber devices, wherein the switching office further includes: a plurality of first media converters, each of which is connected to a different port of the switch at one end thereof through a metal cable and is connected to a different optical cable at the other end thereof; and a test manager connected to each of the first media converters; and each of the subscriber devices includes: a personal computer; and a second media converter which is connected to the personal computer at one end thereof through a metal cable and is connected to a corresponding optical cable at the other end thereof, wherein the test manager includes: an interface to a network manager; and a test manager controller controlling each of the first media converters such that a trigger signal is transmitted to a corresponding second media converter, and a location of a failure is determined depending on whether a response block of data is received from the corresponding second media converter within a predetermined time period, and each of the second media converters includes: a first physical-layer interface to a metal cable; a second physical-layer interface to an optical cable; a memory connected between the first and second physical-layer interfaces, for temporarily storing data to be transferred between the first and second physical-layer interfaces; and a media converter controller controlling such that, when the trigger signal has been received, a response block of data corresponding to the trigger signal is transmitted back to a corresponding first media converter that has transmitted the trigger signal.

According to still another aspect of the present invention, a media converter for converting from one type of media to another, includes: first and second ports which are connected to the one type of media and the other type of media, respectively; a packet buffer for storing a received packet; and a controller controlling such that, when a link on the first port is disconnected, another link on the second port is kept in a connection state and a packet received through the second port is stored in the packet buffer.

According to an embodiment of the present invention, a media converter for converting from one type of media to another, includes: a first physical-layer interface to a first transmission medium; a second physical-layer interface to a second transmission medium; a first memory connected between the first and second physical-layer interfaces, for temporarily storing data to be transferred between the first and second physical-layer interfaces; a second memory included in at least one of the first and second physical-layer interfaces, for storing data received through a corresponding one of the first and second physical-layer interfaces; and a controller controlling such that, when a link on one of the first and second physical-layer interfaces is disconnected, another link on the other one of the first and second physical-layer interfaces is kept in a connection state and data received through the other link is stored in the second memory.

The controller may further access the one of the first and second physical-layer interfaces to acquire link information and may transmit the link information through the other one of the first and second physical-layer interfaces.

The controller may further access the second memory to read the stored data when the link on the one of the first and second physical-layer interfaces has been restored, and may transmit the stored data through the one of the first and second physical-layer interfaces.

According to the present invention, a control method for the media converter includes the steps of: a) monitoring the first and second physical-layer interfaces to determine whether a link is disconnected; b) when a link on one of the first and second physical-layer interfaces is disconnected, keeping another link on the other one of the first and second physical-layer interfaces in a connection state; c) when data has been received through the other link on the other one of the first and second physical-layer interfaces, storing the received data in the second memory.

The control method may further include the steps of: d) accessing the one of the first and second physical-layer interfaces to acquire link information in response to a link information request received from outside; and e) transmitting the link information in a predetermined signal format through the other one of the first and second physical-layer interfaces.

The control method may further include the steps of: f) when the link on the one of the first and second physical-layer interfaces has been restored, accessing the second memory to read the stored data; and g) transmitting the stored data through the one of the first and second physical-layer interfaces.

According to the present invention, a transmission system includes: first end device and second end device which are connected to each other by a link through a plurality of media converters, wherein at least one of the media converters comprises a packet buffer for storing a received packet, wherein the packet buffer divides the link into a first collision domain of the first end device and a second collision domain of the second end device.

The least one of the media converters may further include a controller controlling such that, when a link on one port thereof is disconnected, another link on the other port is kept in a connection state and a packet received through the second port is stored in the packet buffer.

When one of the first and second collision domains becomes in a link disconnection state, the other one of the first and second collision domains may be kept in a link connection state and normal communication is performed between a media converter and a corresponding end device in the other one of the first and second collision domains.

According to the present invention, a transmission system includes: a first media converter installed in a subscriber house; and a second media converter installed in a switching office, wherein the second media converter is connected to the first media converter by an optical fiber cable, wherein the first media converter comprises a packet buffer for storing a received packet, wherein a missing link function is released to keep a link to the switching office in a connection state regardless of a state of a link to the subscriber house.
Fig. 1 is a block diagram showing the internal circuit of a media converter according to a first embodiment of the present invention;
Fig. 2 is a diagram showing a format of a trigger packet used in the first embodiment;
Fig. 3 is a block diagram showing the internal circuit of a test-manager-equipped media converter according to a second embodiment of the present invention;
Fig. 4 is a schematic diagram showing a network system the test-manager-equipped media converter of Fig. 3 for explanation of a failure detection operation;
Fig. 5 is a diagram showing a sequence of response test operation in the network system of Fig. 4;
Fig. 6 is a flowchart showing a test control operation of the test-manager-equipped media converter in the network system of Fig. 4;
Fig. 7 is a flowchart showing a test control operation of the test manager in the network system of Fig. 4;
Fig. 8 is a flowchart showing a triggered operation of a media converter in the network system of Fig. 4;
Fig. 9 is a block diagram showing the internal circuit of a test-manager-equipped media converter according to a third embodiment of the present invention;
Fig. 10 is a block diagram showing a switching system including the test-manager-equipped media converter of Fig. 9;
Fig. 11 is a block diagram showing another switching system having the test manger function similar to the test-manager-equipped media converter of Fig. 9;
Fig. 12 is a block diagram showing the internal circuit of a packet-buffer-equipped media converter according to a fourth embodiment of the present invention;
Fig. 13 is a schematic diagram showing a transmission system using the packet-buffer-equipped media converter of Fig. 12;
Fig. 14A is a schematic diagram showing a communication operation of the transmission system as shown in Fig. 13 when a personal computer 201 is operating;
Fig. 14B is a schematic diagram showing a communication operation of the transmission system as shown in Fig. 13 when a personal computer 201 is powered off; and
Fig. 14C is a schematic diagram showing a communication operation of a conventional transmission system.

### First embodiment

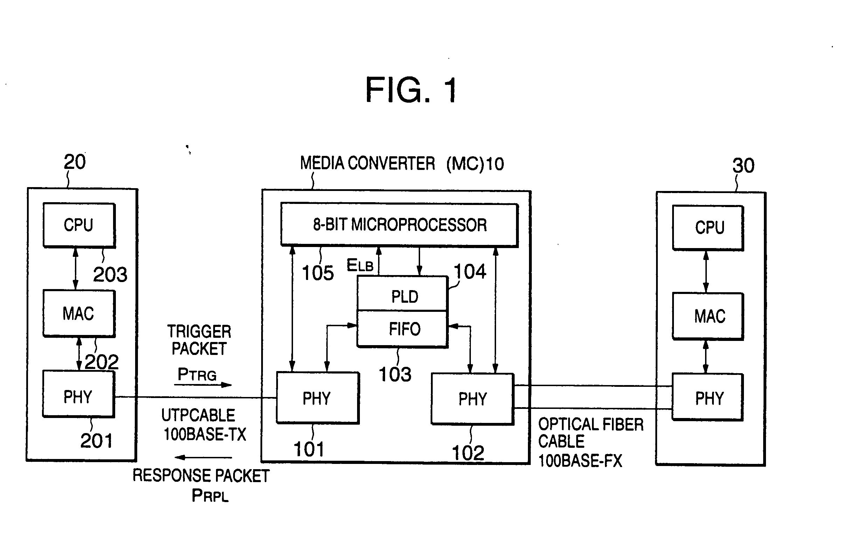

Referring to Fig. 1, a media converter (MC) 10 according to a first embodiment of the present invention is connected to a host computer or management switch 20 through 100BASE-TX:UTP cable and to the other host computer or management switch 30 through 100BASE-FX:optical cable. Needless to say, this system is shown just as an example for simplicity.

### 1.1) Media converter

The media converter 10 has a pair of ports, which are provided with physical-layer devices (PHYs). 101 and 102, which are connected to UTP cable and optical cable, respectively. As described before, the physical-layer devices 101 and 102 support MII (Media Independent Interface) conforming to IEEE802.3 standards.

The media converter 10 is further provided with a FIFO (First-in-first-out) memory 103 that is connected between the physical-layer devices 101 and 102 to absorb frequency deviations between transmission and reception. Data received at one physical-layer device are sequentially written into the FIFO memory 103 and then read out from the FIFO memory 103 in the same sequence to be output to the other physical-layer device.

In addition, the FIFO memory 103 is connected to a PLD (programmable logic device) 104 that has been programmed to provide a predetermined logical function. The PLD 104, as described later, is designed to check data stored in the FIFO memory 103 at a predetermined timing after a packet has been received and, only when the data of the FIFO memory 103 matches predetermined data, to output an enable signal E_{LB} to a microprocessor 105.

The microprocessor 105, when receiving the enable signal E_{LB} from the PLD 104, generates a predetermined response packet and controls a corresponding physical-layer device to send it as a reply to the received packet back to the source.

Further, the microprocessor 105 can access internal registers including farEF (far End Fault) register and Force Link register incorporated in the physical-layer devices 101 and 102 according to IEEE802.3-standard MII. Accordingly, link information indicating link establishment status and/or half/full duplex can be acquired from each physical-layer device. Furthermore, it is possible to force the physical-layer device being in link disconnection status into transmittable state by accessing the Force Link register thereof.

The management switch 20 is provided with a physical-layer device 201 that supports MII conforming to IEEE802.3 standards, MAC (Media Access Control) layer device 202, and a microprocessor (CPU) 203. The physical-layer device 201 is connected to the physical-layer device 101 of the media converter 10 through the UTP cable. The microprocessor 203 can access internal registers incorporated in the physical-layer device 201 according to IEEE802.3-standard MII. Accordingly, link information indicating link establishment status can be acquired from the physical-layer device 201. Furthermore, it is possible to force the physical-layer device 201 being in link disconnection status into transmittable state by accessing the Force Link register thereof.

The management switch 30 has a circuit structure similar to the management switch 20. Its physical-layer device is connected to the physical-layer device 102 of the media converter 10 through the optical cable. The physical-layer device also supports MII conforming to IEEE802.3 standards.

In the case where a normal Ethernet packet is transferred, the media converter 10 performs only normal media conversion. More specifically, a normal Ethernet packet received from the management switch 20 is converted into optical data by the media converter 10 and the optical data is transmitted to the destination host computer or management switch 30 through the optical cable. Contrarily, normal optical data received from the management switch 30 is converted into normal Ethernet packet by the media converter 10 and the normal Ethernet packet is sent to the management switch 20 through UTP cable.

In the case where a response test is activated, the management switch 20 generates a special Ethernet packet including predetermined trigger data (hereafter, called a trigger packet P_{TRG}) and transmits it to the media converter 10 through the UTP cable.

### 1.2) Trigger Packet

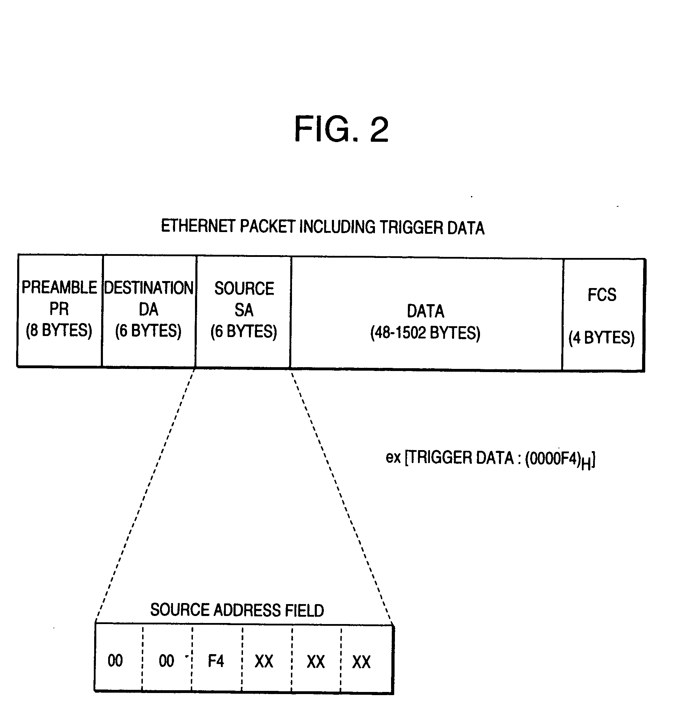

Referring to Fig. 2, similar to a normal Ethernet packet, a trigger packet is composed of 8-byte preamble, 6-byte destination address field, 6-byte source address field, data field of 48-1502 bytes, and 4-byte FCS field. In the case of the trigger packet, predetermined trigger data is written in the source address field.

The trigger data is preferably unique data such as identification number. Here, the ID number assigned to a circuit board incorporated in the media converter 10 is used as the trigger data because the circuit board number is a unique number assigned to the circuit board by the vendor. Such a circuit board number is used as the trigger data to generate a trigger packet having the circuit board number stored in the source address field to transmit it to the media converter 10.

When receiving a packet having its own circuit board number stored in the source address field thereof, the media converter 10 switches into response test mode and generates a response packet to send it back to the management switch 20. When receiving a packet having data other than its own circuit board number stored in the source address field thereof, the media converter 10 passes the packet as a normal packet through.

### Second embodiment

### 2.1) Test-manager-equipped media converter

A media converter according to a second embodiment of the present invention will be described in detail hereafter.

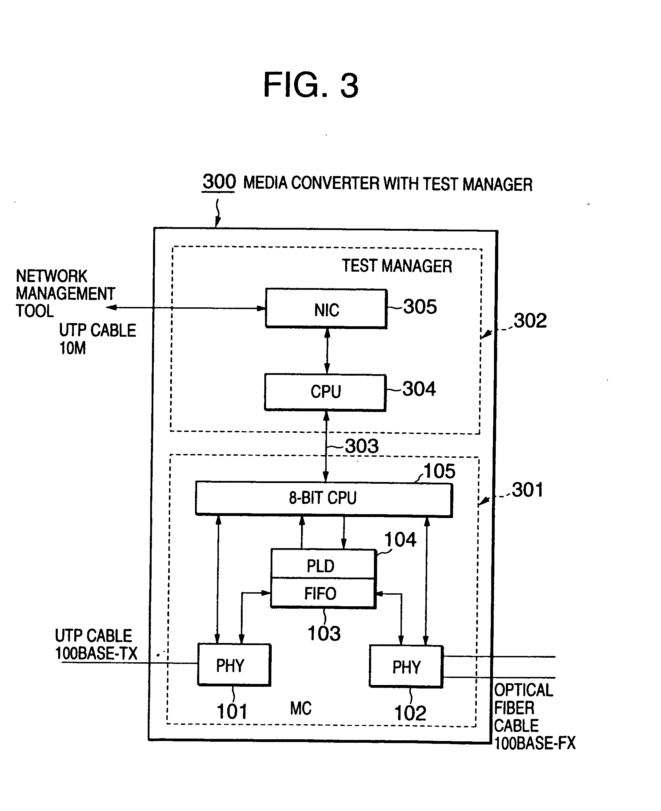

Referring to Fig. 3, a test-manager-equipped media converter 300 is composed of a media converter 301 and a test manager 302 that is connected to the microprocessor 105 of the media converter 301 through a dedicated bus 303. Since the media converter 301 has the substantially same structure as the media converter 10 as shown in Fig. 1, circuit blocks similar to those previously described with reference to Fig. 1 are denoted by the same reference numerals and the descriptions will be omitted.

The test manager 302 includes a microprocessor 304 and a network interface card (NIC) 305. The microprocessor 304 is connected to the microprocessor 105 of media converter 301 through the dedicated bus 303. The network interface card 305 is connected with a network management tool (not shown) through a 10M UTP cable.

As will be described later, the test manager 302 monitors the link status, instructs test startup, and analyze and judge the collected information. Though the above-described media converter 301 works in a basically same manner as the converter 10, the difference exists in exchanging control signals and data between the microprocessor 105 and the microprocessor 304 of the test manager 302 through the dedicated bus 303.

An operation of the test system using the test-manager-equipped media converter 300 will be described below in detail.

### 2.2) Test Sequence

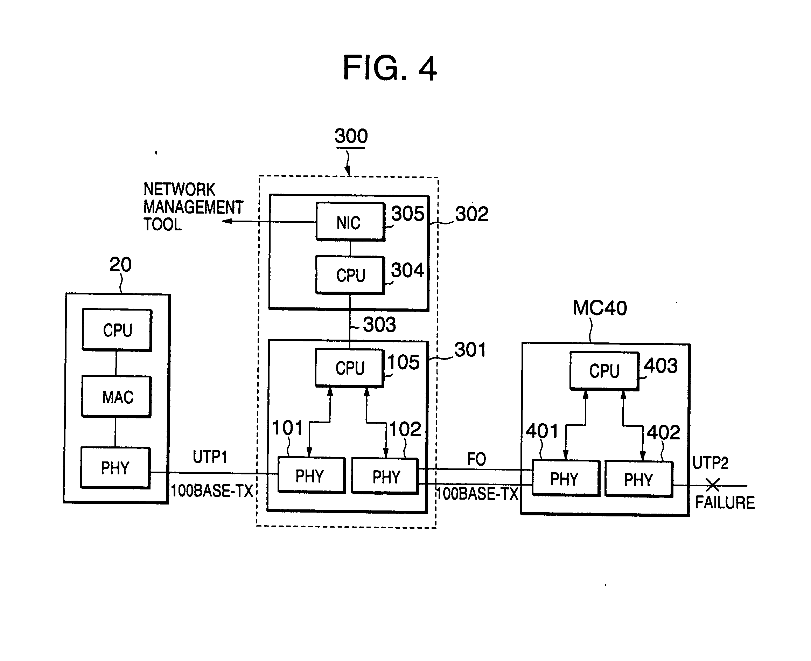

As shown in Fig. 4, it is assumed for simplicity that the test-manager-equipped media converter 300 is connected with the management switch 20 through UTP cable UTP1 and with the other media converter 40 through the optic fiber cable FO and the media converter 40 is further connected with UTP cable UTP2.

It is further assumed that a failure has occurred on the UTP cable UTP2. In this case, since the missing link function is active at both media converters 301 and 40, the entire link is in a disconnection status.

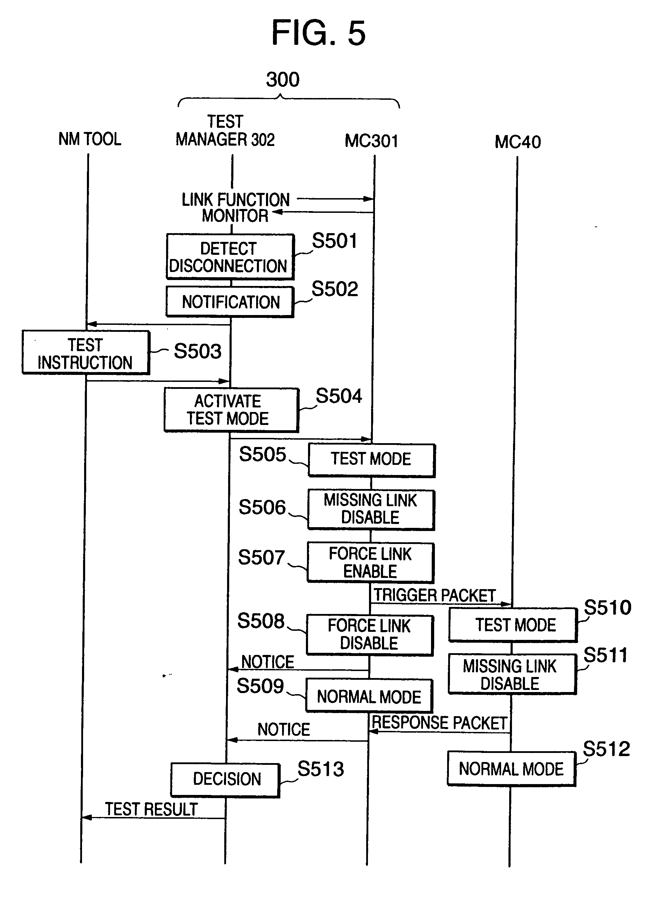

Referring to Fig. 5, the test manager 302 monitors the link status through the media converter 301, and when it detects the link disconnection (step S501), the test manager 302 notifies the network management tool of the link disconnection status (step S502). When the network management tool receives the notification of link disconnection, it instructs the test manager 302 to start the test program (step S503).

When instructed by the network management tool, the test manager 302 starts the test mode (step S504) and causes the media converter 301 to switch to the test mode (step S505). Then, the media converter 301 disables the missing link function (step S506), and switches the physical-layer device 102 to ForceLink Enable status (step S507) to transmit the trigger packet having the unique number of the media converter 40 written in the source address field thereof to the media converter 40. After transmitting the trigger packet, the media convert 301 disables the ForceLink (step S508) and notifies the test manager 302 of the link information. Thereafter, the media converter 301 returns to the normal mode (step S509) and then waits for the corresponding response packet to the trigger packet to be received.

On the other hand, when having received the trigger packet from the media converter 301, the media converter 40 is switched to the test mode (step S510) and disables the missing link function to transmit a response packet back to the media converter 301 (step S511). Thereafter, the media converter 40 returns to the normal mode (step S512). When the media converter 301 receives the response packet from the media converter 40, the media converter 301 reads the link information from the response packet and notifies the test manager 302.

The test manager 302 analyzes the link information received from the media converters 301 and 40 to judge the location of a failure (step S513), and notifies the network management tool of the test result.

### 2.3) Test control of media converter 301

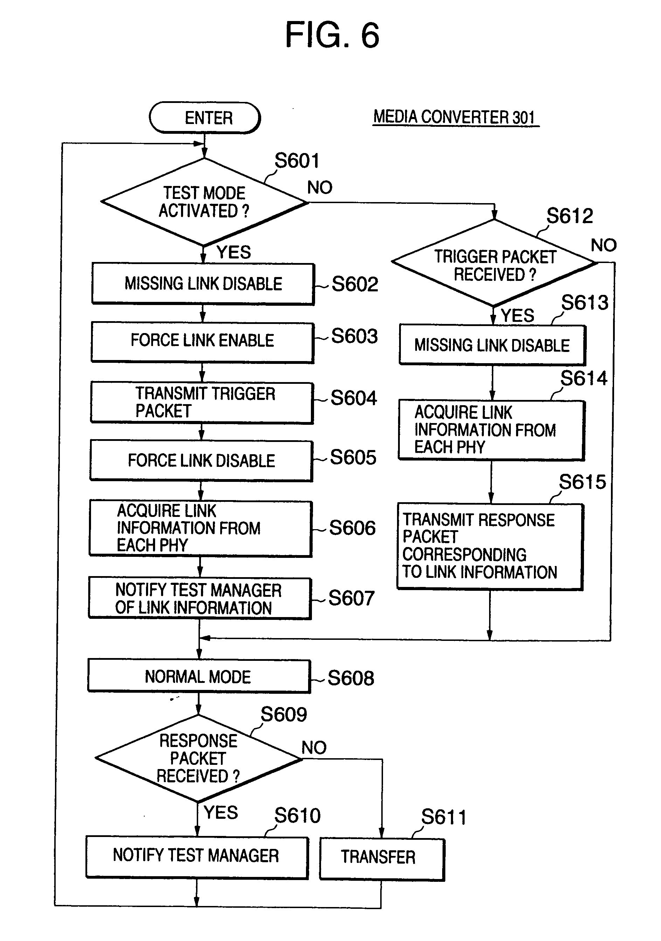

Referring to Fig. 6, when the test manager 302 starts the test mode (YES at step S601), the microprocessor 105 of media converter 301 disables the missing link function (step S602), and switches the physical-layer device 102 to ForceLink Enable status to transmit a trigger packet to the next media converter 40 (step S603). After transmitting the trigger packet addressed to the next media converter 40 (step S604), the microprocessor 105 disables ForceLink status (step S605) and then acquires the link information from each physical-layer device (step S606). The microprocessor 105 notifies the test manager 302 of the acquired link information through the dedicated bus 303 (step S607).

Then, the microprocessor 105 returns to the normal mode (step S608) and waits for the response packet to the transmitted trigger packet to be received (step S609). When the microprocessor 105 receives the response packet (YES at step S609), it reads the link information stored in the response packet to notify the test manager 302 (step S610). When the microprocessor 105 receives any packet other than the response packet (NO at step S609), it just transfers it (step S611).

When the test mode is not started (NO at step S601), the microprocessor 105 determines whether the trigger packet has been received or not (step S612). When the trigger packet has not been received (NO at step S612), the control goes to the step S608. Specifically, when the physical-layer device 101 or 102 receives a packet, the PLD 104 determines whether the data stored in the FIFO memory 103 is the predefined trigger data (the self-identified number) at the predetermined timing. In this case, the content of FIFO memory 103 is checked at the timing of the source address field thereof as shown in Fig. 2. When the trigger data addressed to itself is found in the source address field, it is determined that the trigger packet has been received.

When the trigger packet is received (YES at step S612), the microprocessor 105 of media converter 301 disables the missing link function (step S613) and acquires the link information from each physical-layer device (step S614). As described above, the microprocessor 105 generates the response packet having the acquired link information written in the predetermined location, and transmits it to the source side of trigger packet (step S615). After transmitting the response packet, the control goes to the step S608.

### 2.4) Test control of test manager

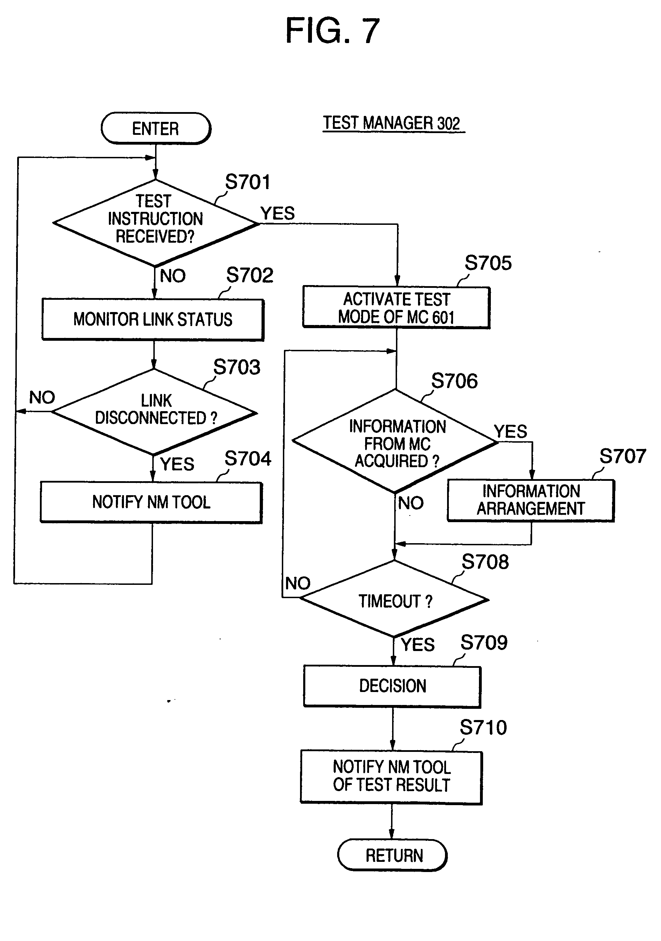

Referring to Fig. 7, unless instructed to start the test from the network management tool (No at step S701), the microprocessor 304 of the test manager 302 monitors the link status through the microprocessor 105 of media converter 301 (step S702) and determines whether the link is disconnected or not (step S703). When the link status is normal (NO at step S703), steps S701 and S702 are repeated until the test startup instruction has been received.

When the microprocessor 304 detects the link disconnection (YES at step S703), the microprocessor 304 notifies the network management tool of the link disconnection (step S704) and waits for the test startup instruction to be received from the network management tool.

When the microprocessor 304 is instructed to start the test by the network management tool (YES at step S701), it starts the test mode of media converter 301 (step S705) and waits for link information to be received from media converters (here, MC301 and MC40) within a predetermined time-out period (steps S706-S708).

Upon receipt of link information from a media converter (YES at step S706), the microprocessor 304 arranges the link information (step S707) and, after an elapse of the predetermined time, determines a test result based on the acquired link information (step S709). For example, if the microprocessor 304 does not acquire link information from the media converter 40 within the predetermined time but from the media converter 301, it can be determined that a failure occurs in the media converter 40 or the optic fiber cable connected between the media converters 301 and 40. In the case where the microprocessor 304 receives the notification within the predetermined time from both media converters 301 and 40, it can be determined from the link information received from the media converter 40 whether a failure occurs on the UTP cable UTP2 (see Fig. 4). The test manager 302 notifies the network management tool of the test result (step S710).

As described above, in the network composed of plural media converters, when trigger packets are sequentially transmitted to plural media converters, it is possible to detect a failure based on their response packets. Since the above-described failure detection can be made by using only media converter 300 without any additional functions to management switch 20, the system structure is simplified.

### 2.5) Test control of media converter 40

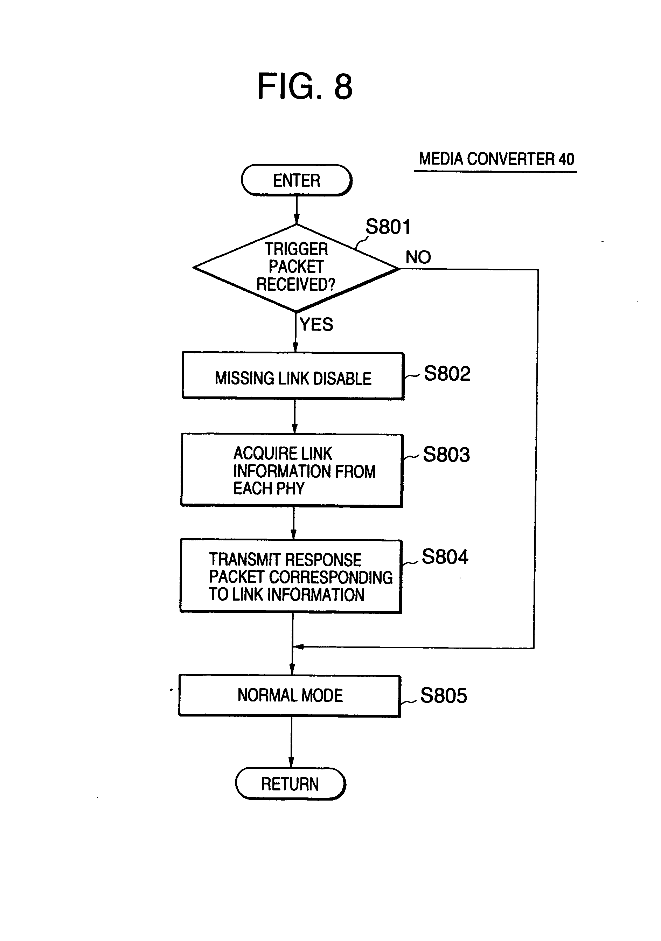

Referring to Fig. 8, the microprocessor 403 determines whether the trigger packet has been received (step S801). When the trigger packet has been received (YES at step S801), the microprocessor 405 disables the missing link function (step S802) and then accesses internal resistors of each physical-layer device to acquire link information (step S803). As described before, the microprocessor 405 generates a response packet P_{RPL} having the acquired link information written in the source address field thereof, and transmits it to the source (step S804). After that, the microprocessor 405 returns to the normal mode (step S805). When the trigger packet is not received (No at step S801), the microprocessor 405 also returns to the normal mode (step S805).

### Third embodiment

A test-manager-equipped media converter according to a third embodiment of the present invention will be described.

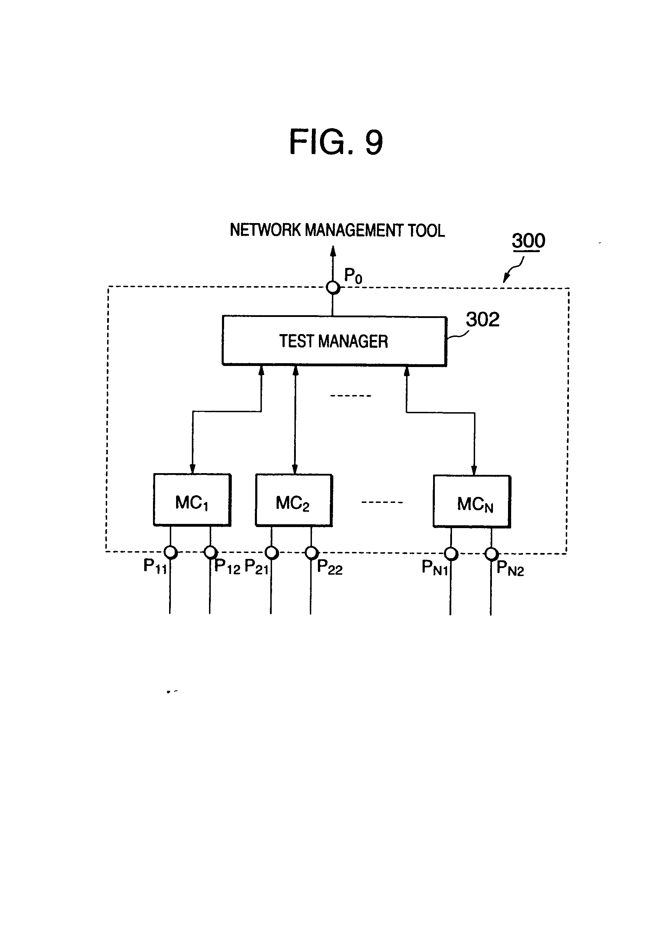

Referring to Fig. 9, a test-manager-equipped media converter 300 has a port P₀ connected to the network management tool and N pairs of port Pᵢ₁ and Pᵢ₂ (i = 1, 2, 3, ... , N) corresponding to N media converters MC₁ to MC_{N}, respectively. The test manager 302 manages each of the media converters MC₁ to MC_{N} as described above.

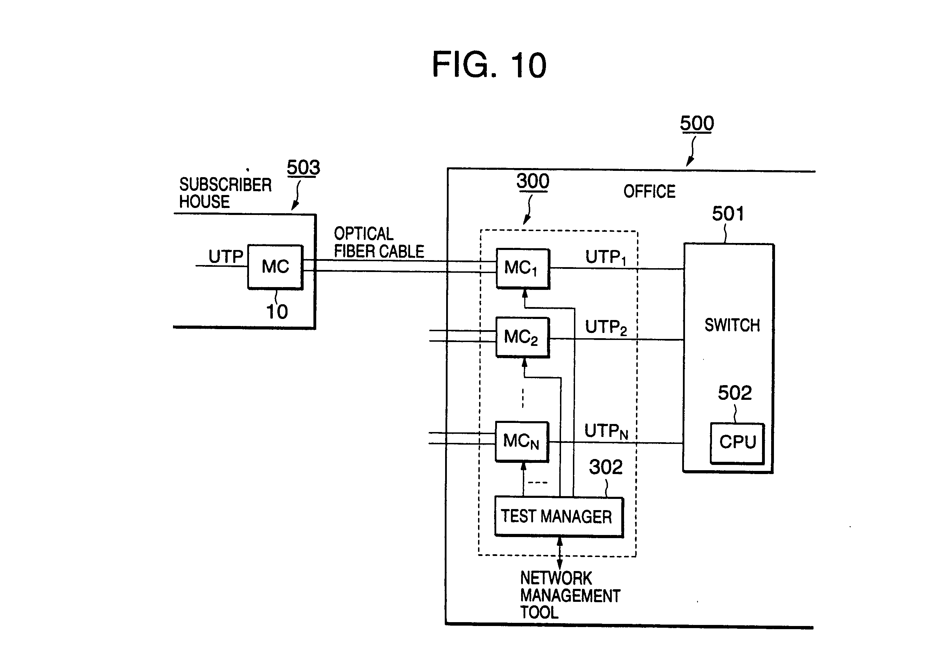

Referring to Fig. 10, a switching office 500 is provided with the test-manager-equipped media converter 300 and a switch 501 including a central processing unit (CPU) 502 for switch control. The switching office 500 has N (N is an integer greater than 1) subscriber lines, each of which is connected to the media converter 10 of a different subscriber 503 by an optical fiber cable.

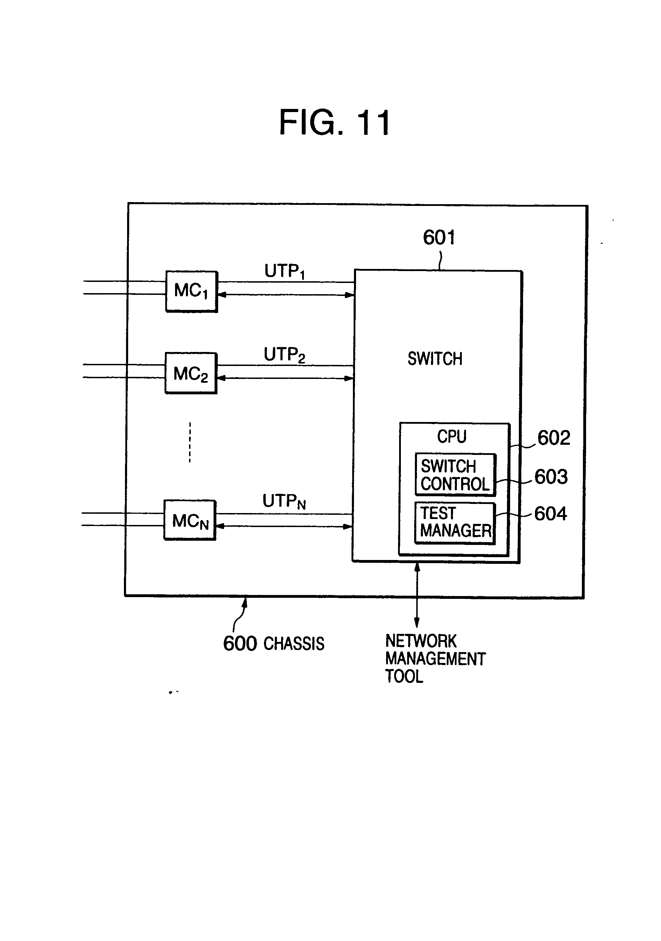

The UTP-side ports of the N media converters MC₁ to MC_{N} are connected to input/output ports of the switch 501 through UTP cables UTP₁-UTP_{N}, respectively. The test manager 302 manages the media converters MC₁ to MC_{N} as described above. The test management function of the test manager 302 is substantially performed by the processor 304 as described before (see Fig. 3). Accordingly, the same function can be implemented by the CPU 502 of the switch 501, which will be described with reference to Fig. 11.

As shown in Fig. 11, a modified example of the switching office 500 includes a chassis 600 mounted with the media converters MC₁ to MC_{N} and a switch 601 including a CPU 602.

The CPU 602 is a program-controlled processor on which a switch control function 603 and a test manger function 604 corresponding to the test manger 302 are implemented. The test manger function 604 manages the media converters MC₁ to MC_{N} as in the case of the test manager 302.

Since the CPU 602 of the switch 601 not only controls the switching but also manages the media converters MC₁ to MC_{N}, the CPU 602 can be efficiently used. In addition, since there is no need of the test manager 302, the amount of hardware can be reduced, achieving miniaturization.

As described above, according to the present invention, by sequentially transmitting trigger packets to plural media converters, failure detection can be made based on their response packets. Particularly, when the response packet has not been received from a certain media converter within the predetermined time, it can be determined that a failure has occurred in more distant from this media converter. Therefore, the occurrence of a failure in a link including media converters can be easily detected and the location of the failure can be specified to some extent.

Each media converter can discriminate a trigger packet addressed thereto from other trigger packets and normal packets . Accordingly, the test mode can be activated by receiving the trigger packet and the response packet in response to the trigger packet can be sent back to the source. Therefore the link test can be started from cable side and it can be verified by receiving the response packet that not only the link reach this media converter but this media converter itself are normally operating.

Further, when each media converter receives any trigger packet other than the trigger packet addressed thereto in the status of missing link, the media converter is switched to the normal mode to pass this received packet through. Therefore, since a packet which does not target this media converter for the response test is passed through, the link test can be performed more distant from there.

According to the test-manger-equipped media converter, when a link disconnection is detected, the test mode is started to transmit the trigger packet and can perform the failure detection test by receiving the response packet. Since no additional function to a management switch is required, the system structure becomes simplified.

### Fourth embodiment

### 4.1) Packet-buffer-equipped media converter

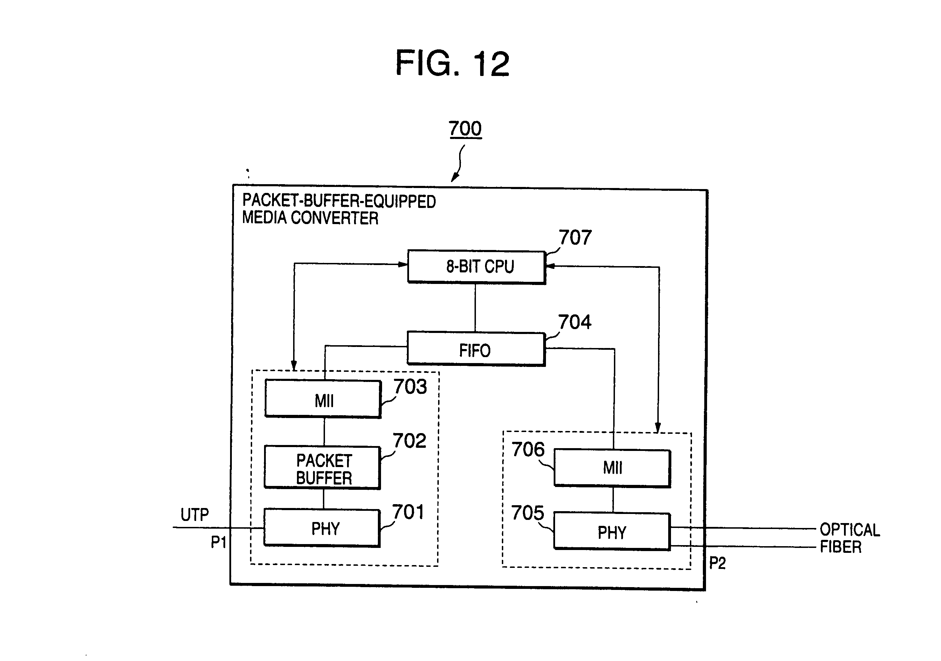

Referring to Fig. 12, a packet-buffer-equipped media converter 700 according to a fourth embodiment of the present invention has a pair of ports P1 and P2, which are connected to a UTP cable and an optical fiber cable, respectively.

The port P1 of the packet-buffer-equipped media converter 700 is provided with a physical-layer device (PHY) 701, which is connected to a FIFO (First-in-first-out) memory 704 via a packet buffer 702 and an MII interface 703 conforming to IEEE802.3 standards. The other port P2 of the packet-buffer-equipped media converter 700 is provided with a physical-layer device (PHY) 705, which is connected to the FIFO memory 704 via an MII interface 706. The FIFO memory 704 allows frequency deviations between transmission and reception to be absorbed.

A microprocessor 707 of the media converter 700 can access internal registers including farEF (far End Fault) register and Force Link register incorporated in the physical-layer devices 701 and 705 according to IEEE802.3-standard MII. Accordingly, link information indicating link establishment status and/or half/full duplex can be acquired from each physical-layer device.

Further, the microprocessor 707, when a received packet has been stored in the FIFO memory 704, determines the type of the received packet from its header information. For example, it is determined which one of an ordinary data packet and a control packet requiring predetermined information has been received.

Furthermore, the microprocessor 707 controls input/output of the packet buffer 702. As described later, even when a link disconnection occurs on one of the UTP cable and the optical fiber cable, the such input/output control allows packets received from the other cable to be stored in the packet buffer 702.

The packet-buffer-equipped media converter 700 normally performs only media conversion. More specifically, when the physical-layer device 701 has received an Ethernet packet from the UTP cable at the port P1, it is transferred to the physical-layer device 705 through the FIFO memory 704 and is converted into optical data to be transmitted to the optical fiber cable from the port P2. Contrarily, when the physical-layer device 705 has received optical data from the optical fiber cable at the port P2, it is converted into an Ethernet packet by the physical-layer device 705 and the Ethernet packet is output to the physical-layer device 701 through the FIFO memory 704 to be transmitted to the UTP cable from the port P1.

In the prior art, when a link disconnection occurs on the UTP cable, the missing link function is activated to set the physical-layer device 705 to the link disconnection status. According to the present embodiment, however, it is possible to set the media converter 700 so as not to activate the missing link function. Accordingly, even when a link disconnection occurs on the UTP cable, the physical-layer device 705 is kept in an ordinary active status, allowing reception and transmission of packets at the port P2 connected to the optical fiber cable. For example, the microprocessor 107 can access internal registers incorporated in the physical-layer device 701 to acquire link information and transmit it to the optical fiber cable from the physical-layer device 705. When having received a packet from the optical fiber cable in such a status that a link disconnection occurs on the UTP cable, the microprocessor 107 stores the received packet into the packet buffer 702. And when the UTP cable has recovered from a disconnection status, the received packets stored in the packet buffer 702 can be sent to the UTP cable.

### 4.2) Transmission system

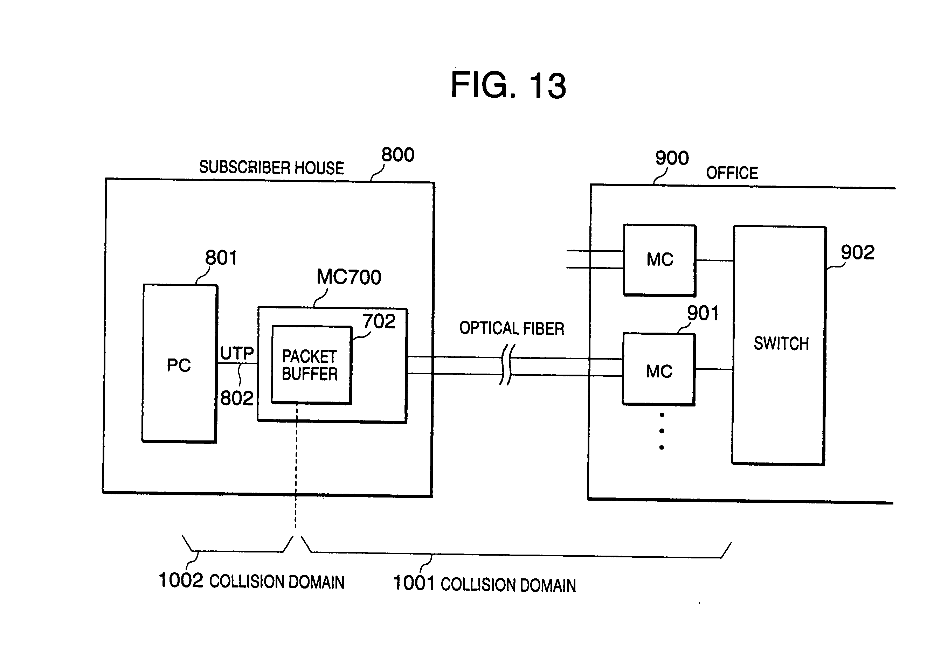

Referring to Fig. 13, it is assumed for simplicity that a subscriber line system is composed of a subscriber house 800 and a switching office 900, which are connected by a subscriber line that is an optical fiber cable. The subscriber house 800 has a personal computer 801 and the packet-buffer-equipped media converter 700 therein, which are connected by a UTP cable 802. The packet-buffer-equipped media converter 700 is connected to a media converter 901 of the switching office 900 through the optical fiber cable. The switching office 900 is provided with a plurality of media converters including the media converter 901, which each correspond to different subscribers, and a switch 902. The switch 902 may include monitors that each monitor subscriber lines. The media converter 901 may be a conventional one, may be connected to the test manager 302 as shown in Fig. 10, or may be controlled by the test manager function 604 in the switch 601 as shown in Fig. 11.

As described before, there is a possibility that the personal computer 801 used in the subscriber house 800 is frequently powered on and off. Every time the personal computer 801 is powered off, the UTP cable 802 becomes in a link disconnection state. When the UTP cable 802 is in a link disconnection state, however, the packet-buffer-equipped media converter 700 according to the present embodiment can use the packet buffer 702 to keep the optical fiber cable active. More specifically, the switch 902 of the switching office 900 can send data to the packet-buffer-equipped media converter 700 through the optical fiber cable and monitor the status of the packet-buffer-equipped media converter 700 by acquiring link information thereof.

From another viewpoint, as shown in Fig. 13, the transmission system from the personal computer 801 of the subscriber house 800 to the switch 902 of the switching office 900 is divided by the packet-buffer-equipped media converter 700 into two collision domains 1001 and 1002. More specifically, the packet buffer 702 divides the transmission system into the collision domain 1001 directed to the switch 902 and the collision domain 1002 directed to the personal computer 801.

### 4.3) Operation

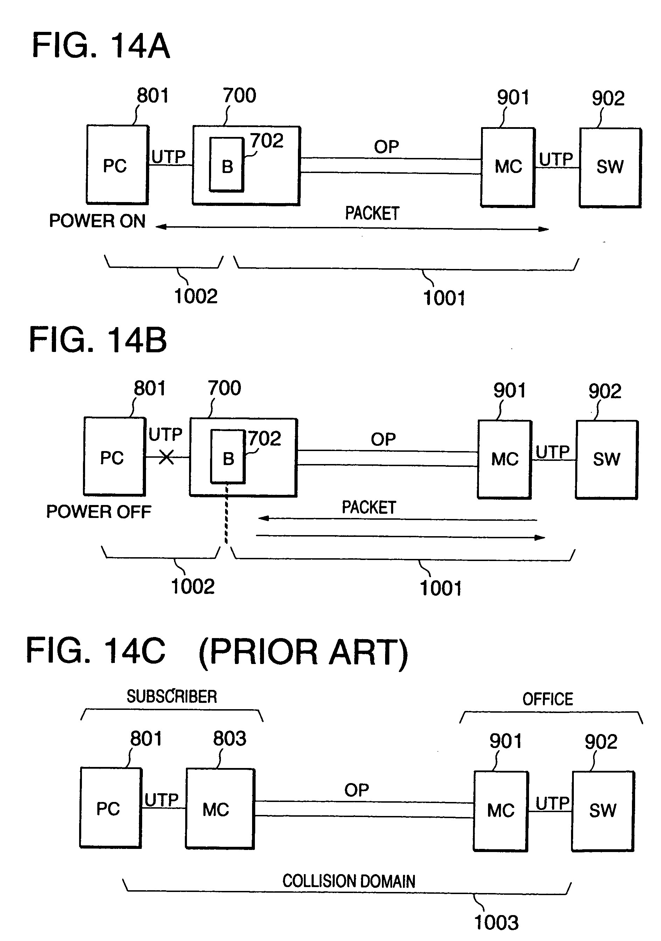

Referring to Fig. 14A, when the personal computer is powered on and normally operates, the packet-buffer-equipped media converter 700 normally performs media conversion as described before. Accordingly, packet transfer is normally performed between the personal computer 801 and the switch 902.

As shown in Fig. 14B, when the personal computer 801 is powered off, the collision domain 1002 becomes in link disconnection state but the physical-layer device 705 is kept active. Accordingly, the media converter 901 of the switching office 900 is also kept active, resulting in normal communication maintained in the collision domain 1001.

For example, when the switching office 900 has received a packet of data addressed to the subscriber house 800, the switch 902 forwards it to the subscriber house 800 through the optical fiber cable. When receiving the packet of data from the switch 902, the media converter 700 temporarily stores it in the packet buffer 702 without transferring it to the personal computer 801 during power-down. Thereafter, when the personal computer 801 is powered up and starts operating normally, the packet of data stored in the packet buffer 702 is sent to the personal computer 801 through the UTP cable.

Alternatively, the monitor circuit for the subscriber line (optical fiber cable) installed in the switch 902 may send a link information request signal to the media converter 700 at regular intervals to maintain the normal communication state of the collision domain 1001. In response to this link information request signal, the microprocessor 707 accesses the internal registers of the physical-layer device 701 to acquire the link information and sends a response packet having the acquired link information back to the switch 902. When having received the response packet from the subscriber house 800, the monitor circuit determines that the line between the media converter 700 of the subscriber house 800 and the switching office 900 is normally operating and the UTP-cable side of the media converter 700 is in a link disconnection status.

### 4.4) Comparison

Advantages of the packet-buffer-equipped media converter are apparently found by comparing to the prior art as shown in Fig. 14C.

According to the prior art, the transmission system from the switch 902 to the personal computer 801 consists of a single collision domain 1003 as shown in Fig. 14C. Accordingly, when a link disconnection of the UTP cable within the subscriber house occurs, the media converters 803 and 901 activate the missing link function, which causes the entire collision domain 1003 to be automatically set to the disconnection status. During such disconnection, the monitor circuit of the switch 902 cannot monitor the optical fiber cable and the media converters at all. Further, the switch 902 cannot send data to the subscriber until the personal computer 801 has been powered up.

In contrast, according to the present embodiment, the packet buffer 702 of the media converter 700 divides the transmission system into two collision domains 1001 and 1002. When the UTP cable within the subscriber house is in a link disconnection state, the packet-buffer-equipped media converter can use the packet buffer to keep the optical fiber cable active, allowing data transmission from the switch 902 of the switching office 900 to the packet-buffer-equipped media converter 700 through the optical fiber cable and further allowing monitoring of the status of the subscriber house.

## Claims

1. A transmission system for transmitting data between a first communication point and a second communication point along a link, comprising:
a plurality of media converters (10, MC₁) included in the link, each of which comprises:
a first physical-layer interface (101) to a first transmission medium;
a second physical-layer interface (102) to a second transmission medium;
a memory (103) connected between the first and second physical-layer interfaces, for temporarily storing data to be transferred between the first and second physical-layer interfaces; and
a media converter controller (105) controlling such that, when a trigger signal has been received, a response block of data corresponding to the trigger signal is transmitted from a corresponding one of the first and second physical-layer interfaces back to a source that has transmitted the trigger signal; and
a test manager (302) connected to one of the media converters, comprising:
an interface (305) to a network manager; and
a test manager controller (304) controlling such that a trigger signal is transmitted to another media converter, and a location of a failure is determined depending on whether a response block of data is received from a corresponding media converter within a predetermined time period.

2. The transmission system according to claim 1, wherein the first communication point is one of a plurality of ports of a switch and the second communication point is a personal computer, wherein the test manager is connected to a media converter which is directly connected to the switch.

3. The transmission system according to claim 1, wherein the first communication point is one of a plurality of ports of a switch and the second communication point is a personal computer, wherein the test manager is implemented in a program-controlled processor of the switch to control a media converter which is directly connected to the switch.

4. The transmission system according to claim 1, 2 or 3 wherein the test manager controller determines that a failure occurs at a location beyond the corresponding media converter when a response block of data is not received from a corresponding media converter within a predetermined time period.

5. The system according to claim 1, 2, 3 or 4 wherein each of the first and second physical-layer interfaces supports MII (Media Independent Interface) conforming to IEEE802.3 standards.

6. The transmission system according to claim 5, wherein the media converter controller accesses another one of the first and second physical-layer interfaces to acquire link information from the other physical-layer interface when the trigger signal has been received and generates the response block of data corresponding to the link information.

7. The transmission system according to claim 5, wherein the test manager controller disables the missing link state when a test is started and forces a corresponding physical-layer interface into transmittable state to transmit the block of data to the link.

8. The transmission system according to claim 5, wherein the media converter controller disables a missing link state when the trigger signal has been received, and transmits the response block of data to the source.

9. The transmission system according to claim 8, wherein when a received block of data is not a trigger signal under the missing link state, the media converter controller disables the missing link state to transfer the received block of data to the other one of the first and second physical-layer interfaces.

10. A transmission system for transmitting data between a switching office (500) and each of a plurality of subscriber devices (503), wherein the switching office comprises a switch (501) having a plurality of ports corresponding to respective ones of the subscriber devices, wherein
the switching office further comprises:
a plurality of first media converters (MC₁-MC_{N}), each of which is connected to a different port of the switch at one end thereof through a metal cable and is connected to a different optical cable at the other end thereof; and
a test manager (302) connected to each of the first media converters; and
each of the subscriber devices comprises:
a personal computer; and
a second media converter (10) which is connected to the personal computer at one end thereof through a metal cable and is connected to a corresponding optical cable at the other end thereof,
wherein the test manager (302) comprises:
an interface (305) to a network manager; and
a test manager controller (304) controlling each of the first media converters such that a trigger signal is transmitted to a corresponding second media converter, and a location of a failure is determined depending on whether a response block of data is received from the corresponding second media converter within a predetermined time period, and
each of the second media converters comprises:
a first physical-layer interface to a metal cable;
a second physical-layer interface to an optical cable;
a memory connected between the first and second physical-layer interfaces, for temporarily storing data to be transferred between the first and second physical-layer interfaces; and
a media converter controller controlling such that, when the trigger signal has been received, a response block of data corresponding to the trigger signal is transmitted back to a corresponding first media converter that has transmitted the trigger signal.

11. A media converter for converting from one type of media to another, comprising:
first and second ports (P₁, P₂) which are connected to the one type of media and the other type of media, respectively;
a packet buffer (702) for storing a received packet; and
a controller (707) controlling such that, when a link on the first port is disconnected, another link on the second port is kept in a connection state and a packet received through the second port is stored in the packet buffer.

12. A media converter for converting from one type of media to another, comprising:
a first physical-layer interface (701) to a first transmission medium;
a second physical-layer interface (705) to a second transmission medium;
a first memory (704) connected between the first and second physical-layer interfaces, for temporarily storing data to be transferred between the first and second physical-layer interfaces;
a second memory (702) included in at least one of the first and second physical-layer interfaces, for storing data received through a corresponding one of the first and second physical-layer interfaces; and
a controller (707) controlling such that, when a link on one of the first and second physical-layer interfaces is disconnected, another link on the other one of the first and second physical-layer interfaces is kept in a connection state and data received through the other link is stored in the second memory.

13. The media converter according to claim 12, wherein each of the first and second physical-layer interfaces supports MII (Media Independent Interface) conforming to IEEE802.3 standards.

14. The media converter according to claim 12 or 13, wherein the controller further accesses the one of the first and second physical-layer interfaces to acquire link information and transmits the link information through the other one of the first and second physical-layer interfaces.

15. The media converter according to claim 12, 13 or 14 wherein the controller further accesses the second memory to read the stored data when the link on the one of the first and second physical-layer interfaces has been restored, and transmits the stored data through the one of the first and second physical-layer interfaces.

16. A control method for a media converter for converting from one type of media to another, wherein the media converter comprises:
a first physical-layer interface to a first transmission medium;
a second physical-layer interface to a second transmission medium;
a first memory connected between the first and second physical-layer interfaces, for temporarily storing data to be transferred between the first and second physical-layer interfaces; and
a second memory included in at least one of the first and second physical-layer interfaces, for storing data received through a corresponding one of the first and second physical-layer interfaces,
the control method comprising the steps of:
a) monitoring the first and second physical-layer interfaces to determine whether a link is disconnected;
b) when a link on one of the first and second physical-layer interfaces is disconnected, keeping another link on the other one of the first and second physical-layer interfaces in a connection state;
c) when data has been received through the other link on the other one of the first and second physical-layer interfaces, storing the received data in the second memory.

17. The control method according to claim 16, further comprising the steps of:
d) accessing the one of the first and second physical-layer interfaces to acquire link information in response to a link information request received from outside; and
e) transmitting the link information in a predetermined signal format through the other one of the first and second physical-layer interfaces.

18. The control method according to claim 16 or 17 further comprising the steps of:
f) when the link on the one of the first and second physical-layer interfaces has been restored, accessing the second memory to read the stored data; and
g) transmitting the stored data through the one of the first and second physical-layer interfaces.

19. A transmission system comprising:
first end device and second end device which are connected to each other by a link through a plurality of media converters, wherein at least one of the media converters comprises a packet buffer for storing a received packet, wherein the packet buffer divides the link into a first collision domain of the first end device and a second collision domain of the second end device.

20. The transmission system according to claim 19, wherein said least one of the media converters further comprises a controller controlling such that, when a link on one port thereof is disconnected, another link on the other port is kept in a connection state and a packet received through the second port is stored in the packet buffer.

21. The transmission system according to claim 19 or 20, wherein when one of the first and second collision domains becomes in a link disconnection state, the other one of the first and second collision domains is kept in a link connection state and normal communication is performed between a media converter and a corresponding end device in the other one of the first and second collision domains.

22. A transmission system comprising:
a first media converter installed in a subscriber house; and
a second media converter installed in a switching office, wherein the second media converter is connected to the first media converter by an optical fiber cable,
wherein the first media converter comprises a packet buffer for storing a received packet, wherein a missing link function is released to keep a link to the switching office in a connection state regardless of a state of a link to the subscriber house.
